# EUROPEAN PATENT SPECIFICATION

(11) **EP 0 997 631 B1**
(45) Date of publication and mention of the grant of the patent: **25.09.2002**
(21) Application number: 99121486.7
(22) Date of filing: 28.10.1999
(51) Int. Cl.: F02M 3/07, F02D 31/00

(54) **Idling speed control system for multi-cylinder internal combustion engine**
Vorrichtung zur Regelung der Leerlaufdrehzahl einer Mehrzylinder-Brennkraftmaschine
Dispositif de réglage de la vitesse de ralenti d'un moteur multi-cylindre à combustion interne

(30) Priority: 28.10.1998 JP 30725698; 28.10.1998 JP 30726998; 22.02.1999 JP 4344499
(43) Date of publication of application: 03.05.2000
(73) Proprietor: SANSHIN KOGYO KABUSHIKI KAISHA, Hamamatsu-shi Shizuoka-ken (JP)
(72) Inventor: Nakayasu, Yoshikazu, c/o Sanshin Kogyo K. K., Hamamatsu-shi, Shizuoka-ken (JP)
(74) Representative: Grünecker, Kinkeldey, Stockmair & Schwanhäusser Anwaltssozietät

(56) References cited:
- GB-A- 2 321 085
- US-A- 5 146 888
- US-A- 5 649 512
- US-A- 5 769 060

## Description

This invention relates to an idling speed control system for a multiple-cylinder internal combustion engine according to the preamble of claim 1.

In US-A-5,796,060 an induction system for an engine as indicated above is disclosed.

Further, in US-A-5,649,512 an idle air control device for an internal combustion engine is disclosed, wherein said idle air control device includes a metered air line for receiving air into the idle air control system and a slide metering valve including a housing comprising a slider plate for blocking the air flow from the air intake passages to the cylinders through the idle air control device during load condition of the engine and for letting pass the air flow from the air intake passages to the cylinders through the idle air controlling device during idle condition of the engine.

Otherwise, in the idling speed control system of multiple-cylinder internal combustion engines for electronically controlling the idling speed (number of revolutions when the engine is idling), a method is employed that is providing a bypass pipe for bypassing a throttle valve and an idling speed control device (hereinafter abbreviated to ISC) for regulating the intake air rate supplied to an intake pipe through the bypass pipe during idling, and the ISC is feedback-controlled according the deviation of the actual engine speed from a target idling speed.

Incidentally, multiple-cylinder engines are generally of the type in which the intake pipes for respective cylinders are joined together into one pipe to provide with one throttle valve, and the idling speed is controlled with a single ISC.

However, when the multiple intake pipes for the multiple cylinders are joined together into one pipe, a surge tank becomes necessary, and there is a problem that the entire intake system becomes large due to the surge tank.

Therefore, a constitution is proposed in which respective cylinders are provided with throttle valves independent of each other, and the surge tank is omitted.

However, providing each cylinder with an independent throttle valve requires the same number of ISCs as the number of the cylinders, which results in a problem of complicated control of the ISCs. That is to say, since intake pressures during idling are different from cylinder to cylinder, if the ISCs are provided in the same number as the cylinders, each cylinder requires the respective controlling map. Another problem is that, since the intake air rates are controlled for respective cylinders independently of each other, idling speeds become unstable, or a very complicated control is required.

Accordingly, it is an objective of the present invention to provide an idling speed control system for a multiple-cylinder internal combustion engine as indicated above that can control the idling revolution of the engine in a stabilized manner using a single idling speed control device even if the cylinders are respectively provided with an independent throttle valve.

This objective is solved according to the present invention by an idling speed control system for a multiple-cylinder internal combustion engine, wherein each cylinder has an independent throttle valve with said engine for controlling a rate of intake air supplied, while bypassing each throttle valve, to an intake pipe of each cylinder when said engine is idling, comprising a single idling speed control device having an inlet, and an air chamber or air rail having bypass pipes for connecting said idling speed control device to said intake pipes of respective cylinders, wherein said single idling speed control device is attached to the air chamber or air rail, and an intake air pressure sensor is also attached to said air chamber or air rail, and in that a total cross-sectional area of said bypass pipes is made greater than or equal to a cross-sectional area of said inlet of said idling speed control device.

According to a preferred embodiment, the bypass pipe is constituted with a flexible hose connected through a joint pipe to the idling speed control device, and that the cross-sectional area of the flexible hose is made greater than the cross-sectional area of the joint pipe.

According to still another preferred embodiment, it is possible that the multiple-cylinder internal combustion engine is an engine for outboard motors in which a plurality of cylinders are arranged vertically in line, and that the idling speed control device is provided inside of the intake pipe of each cylinder.

Therefore, according to the invention, since the total cross-sectional area of the bypass pipes connecting the idling speed control device to intake pipes of respective cylinders is made greater than or equal to the cross-sectional area of the inlet of the idling speed control device, the velocity of the intake air flowing through the bypass pipes during idling is reduced, and the intake air pressures in the respective cylinders are approximately equal to each other, to be able to control the intake air amounts for the respective cylinders using a common control map. As a result, the idling speed can be controlled in a stabilized manner using a single idling speed control device, even if a constitution is employed that each cylinder is provided with an independent throttle valve.

According to still another preferred embodiment, a regulator for controlling fuel pressure is connected to the air chamber.

According to still another preferred embodiment, the air chamber is constituted with an air rail extending in the vertical direction in the vicinity of intake pipes, disposed one over another in the engine, and the idling speed control device is attached to the upper part of the air rail.

According to a further embodiment, the air chamber is constituted with an air rail extending in the vertical direction in the vicinity of intake pipes, disposed one over another in the engine, and the idling speed control device is attached to a middle height position of the air rail.

According to still another embodiment, the air chamber is constituted with an air rail extending in the vertical direction in the vicinity of intake pipes, disposed one over another in the engine, and the idling speed control device is attached to the lower part of the air rail.

Moreover, propulsion unit engines include one for example, in which a throttle valve is provided in the intake passage for drawing intake air into cylinders, the throttle valve is bypassed through a bypass passage during idling, and an idling speed control device is provided to control the intake amount supplied to the intake passage by controlling a control valve.

Providing the idling speed control device makes it possible to secure the amount of air at the time of starting the engine or when the engine is cold, to secure the amount of air during warm-up operation, to control the idling speed (in or out of gear), and to prevent the engine from stalling during deceleration.

If the idling speed control device is for use only to control the idling speed (in or out of gear), the amount of required air may be the amount enough to operate in idling. However, more amount of air must be secured to satisfy the needs of; securing the amount of air at the time of starting the engine or when the engine is cold, securing the amount of air during warm-up operation, and preventing the engine from stalling during deceleration.

However, in a majority of shifting structures of the current outboard motors, the dog clutch is usually employed. In that case, if the amount of air is increased too much with the idling speed control device, the engine speed increases and may result in that the gears cannot be disengaged.

Major trend of using the dog clutch in the shifting structure for outboard motors is an additional factor to the problem that, in particular when shifting from an in-gear state to an out-of-gear state, the shifting load increases with the increase of the engine speed, and beyond a certain engine speed, shifting operation becomes impossible.

In particular in the case of a multi-cylinder 4-cycle engine with a plural number of throttle valves, unless each cylinder is provided with an idling speed control device, air must be supplied through piping or the like to the plural number of cylinders with a single idling speed control device. This may lead to the problem that, in the case the piping is broken or comes off, a large amount of air is supplied, the engine speed exceeds a normal range, and shifting operation becomes impossible.

In that case, according to a preferred embodiment, a control valve is disposed in the bypass passage and a reduced diameter section is provided between the control valve and the opening on the intake passage side of the bypass passage.

According to this embodiment, since a reduced diameter section is provided between the control valve and the opening on the intake passage side of the bypass passage, the engine speed is prevented from increasing beyond a specified value with the idling speed control device. Also, engine speed is prevented from increasing-as a result of a large amount of air being supplied, even if the bypass pipe is broken, or the piping comes off.

According to still another embodiment a diameter of the reduced diameter section is in the range that makes it possible to produce an engine speed at which a shifting operation of the engine is possible.

According to this embodiment it is possible to prevent air from being supplied excessively.

According to a further embodiment, the throttle valve is provided at the throttle body, a bypass passage is formed to be connected to the intake passage on the downstream side of the throttle body, a bypass pipe having the control valve is connected to the bypass passage, and the bypass passage is provided with a reduced diameter section.

According to this embodiment, it is possible to arrange securely that a large amount of air is not supplied to the intake passage on the downstream side of the throttle body, even if the bypass pipe provided with the control valve connected to the bypass passage comes off or deteriorates.

According to still a further embodiment, it is possible that the bypass passage is connected to said intake passage of a plurality of cylinders, and an intake passage connecting section of the bypass passage is provided with a reduced diameter section.

According to this embodiment air is drawn independently to respective cylinders and, therefore, the intake occurs nearly uniformly among the cylinders in a stabilized manner even when the idling speed control is performed for a plural number of cylinders.

Further, according to another preferred embodiment, when throttle valves are provided in intake passages for independently drawing intake air into a plural number of cylinders, and an amount of intake air supplied to the intake passages of the plural number of cylinders are controlled with the idling speed control device.

According to this embodiment the intake air is led from the idling speed control device through respective bypass passages and the reduced diameter section provided before the intake passage, and supplied to respective intake passages. The intake air is not supplied in excess of an amount set with the reduced diameter section even if the bypass pipe is broken or comes off. In any circumstances, the engine speed does not increase to such a range that disables shifting operation.

Moreover, according to a further preferred embodiment, the intake passage branches into a plural number of branch intake passages, intake air is drawn from the branch intake passages into respective cylinders, a throttle valve is provided in the intake passage before branching, and the amount of intake air supplied to the intake passage is controlled with the idling speed control device:

According to this embodiment, the intake air is not supplied in excess of an amount set with the reduced diameter section even if the bypass pipe deteriorates or comes off. In any circumstances, the engine speed does not increase to such a range that disables shifting operation.

Other preferred embodiments of the present invention are laid down in further dependent claims.

In the following, the present invention is explained in greater detail with respect to several embodiments thereof in conjunction with the accompanying drawings, wherein:
FIG. 1 is a side view of an outboard motor;
FIG. 2 is a side view of a multi-cylinder engine mounted on the outboard motor;
FIG. 3 is a plan view of a multi-cylinder engine mounted on the outboard motor,
FIG. 4 shows the constitution of the idling speed control system of the second embodiment;
FIG. 5 shows a system constitution of an idling speed control system according to the first embodiment;
FIG. 6 is a side view of an outboard motor;
FIG. 7 shows a system constitution of an idling speed control system according to the fourth embodiment;
FIG. 8 shows a system constitution of an idling speed control system according to the fifth embodiment;
FIG. 9 shows a system constitution of an idling speed control system according to the sixth embodiment;
FIG. 10 shows a system constitution of an idling speed control system according to the seventh embodiment;
FIG. 11 is a side view of a small vessel provided with an outboard motor;
FIG. 12 is a plan view of the engine section of the outboard motor;
FIG. 13 shows a cross-section of an idling speed control device;
FIG. 14 shows the relation between engine speed and gear disengagement load;
FIG. 15 shows the relation between reduced diameter and engine speed; and
FIG. 16 roughly shows a constitution of the idling speed control device.

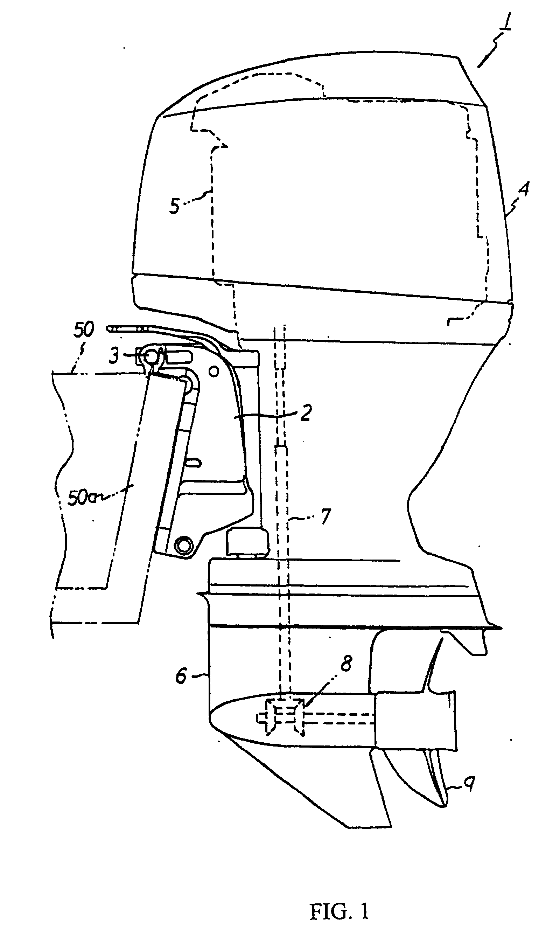

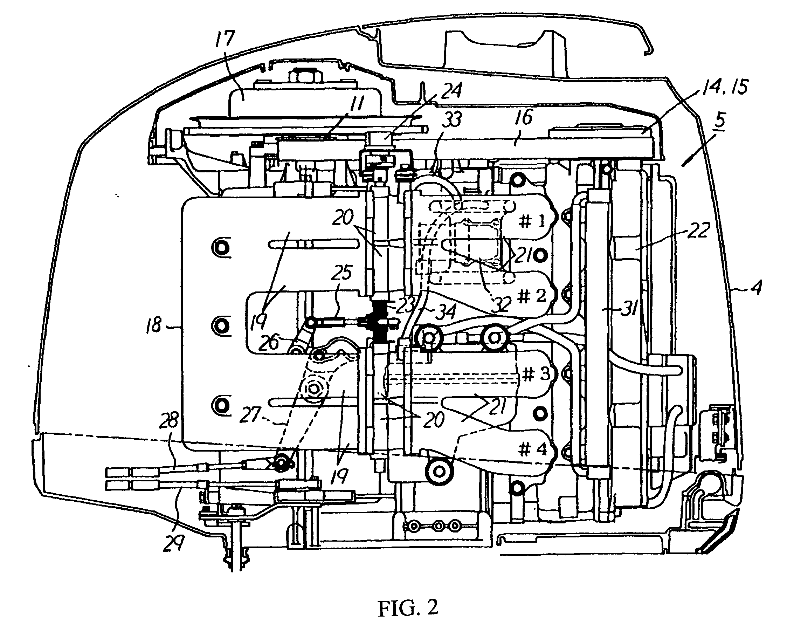

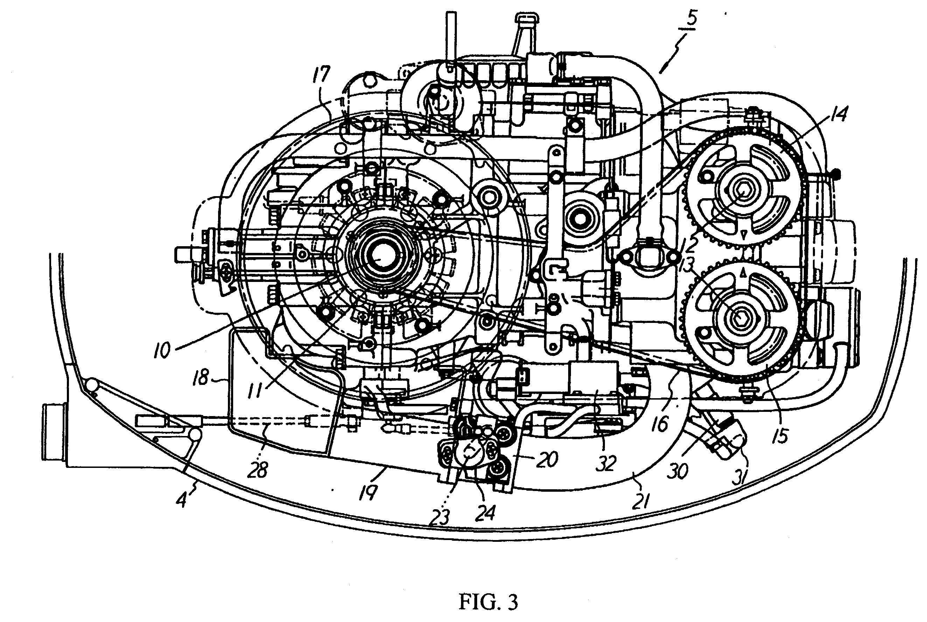

FIG. 1 is a side view of an outboard motor. FIG. 2 is a side view of a multiple-cylinder internal combustion engine mounted on the outboard motor. FIG. 3 is a plan view of the multiple-cylinder internal combustion engine.

The outboard motor 1 shown in FIG. 1 is mounted to a stern board (transom) 50a of a hull 50 using a clamp bracket 2, for up and down swinging about a tilt shaft 3, and with a multiple-cylinder engine 5 accommodated in an upper cowling 4.

In the lower part of the outboard motor 1 is provided a propulsion unit 6 comprising a drive shaft 7 driven for rotation with the multiple-cylinder internal combustion engine 5, a forward-reverse run changing mechanism 8 for changing the rotating direction of the drive shaft 7, and a propeller 9 to which the rotation is transmitted through the forward-reverse run changing mechanism 8.

The multiple-cylinder internal combustion engine 5 is of a fuel injection type with four-cycle, in-line, four cylinders, with its crankshaft 10 extending in the vertical direction (normal to the drawing of FIG. 3) and the four cylinders disposed one under another (numbered from top down as No. 1 to No. 4) in a vertical row. Although not shown, a piston for sliding horizontally is disposed inside of each of the No. 1 to No. 4 cylinders. The pistons are connected through connecting rods to the crankshaft 10.

As shown in FIGs. 2 and 3, an endless cam belt 16 is routed around a small diameter pulley 11 attached to the top end of the crankshaft 10 and large diameter pulleys 14, 15 attached to the top ends of the camshafts 12,13. A flywheel magneto 17 is attached to the top end of the crankshaft 10. The drive shaft 7 (see FIG. 1) is connected to the bottom end of the crankshaft 10.

From a silencer 18 disposed on one side of the engine 5, four intake pipes 19 extend horizontally rearward (to the right in FIG. 2). To each of the intake pipes 19 is attached an independent throttle body 20 for each of the No. 1 to No. 4 cylinders. Intake pipes 21 respectively connected to the throttle bodies 20 are connected to respective intake passages (not shown) formed respectively for the No. 1 to No. 4 cylinders. Two intake pipes 21 of the upper two cylinders No. 1 and No. 2 and the other two intake pipes 21 of the lower two cylinders No. 3 and No. 4 are joined together in the middle.

As shown in FIG. 2, a valve shaft 23 passes in the vertical direction through all of the throttle bodies 20. Throttle valves (not shown) installed in the respective throttle bodies 20 are attached to the valve shaft 23. A throttle valve opening sensor 24 is attached to the top end of the valve shaft 23. A throttle cable 28 is connected through a rod 25, and levers 26,27 to the middle part of the valve shaft 23. FIG. 2 also shows a shift cable 29 for shifting forward-reverse runs by operating the forward-reverse run changing mechanism 8.

The four cylinder engine 5 of this embodiment is of the fuel injection type in which injectors 30 for respective cylinders No. 1 to No. 4 are attached to the cylinder head 22 (See FIG. 3). Fuel supplied from delivery pipes 31 arranged in a vertical directory is injected through the injectors 30 to the intake passages of the cylinders No. 1 to No. 4 according to appropriate timing.

As shown in the figure an idling speed control device (hereinafter abbreviated to ISC) 32 is disposed inside of the two upper intake pipes 21. An idling speed control valve (ISC valve, not shown) is provided in the ISC 32. The opening degree of the ISC valve is controlled with an engine control unit (ECU, not shown).

The inlet of the ISC 32 is connected to the silencer 18. Two flexible rubber hoses 33,34 constituting the bypass pipes extend from the outlet of the ISC 32. One of the rubber hoses 33 is connected to the confluent area of the intake pipes 21 for the cylinders No. 1 and No. 2 while the other rubber hose 34 is connected to the confluent area of the intake pipes 21 for the cylinders No. 3 and No. 4.

With the constitution described above, the flow rate of the intake air (fresh air) drawn into the silencer 18 is controlled as the throttle valves in the respective throttle bodies 20 are simultaneously opened and closed by the operation of the throttle cable 28 during loaded operation of the 4-cylinder engine 5. The intake air passing through the throttle valves flows through intake pipes 21 to the intake passages formed in the cylinder head where the intake air mixes with fuel injected from injectors 30 according to appropriate timing sequence to form air-fuel mixture of a predetermined air-fuel ratio. When intake valves (not shown) of the cylinders No. 1 to No. 4 are opened, the air-fuel mixture is drawn into the cylinders, compressed with the pistons and subjected to combustion in the combustion chambers.

As the 4-cylinder engine 5 is operated as described above and the crankshaft 10 is driven to rotate at specified speeds, the rotation is transmitted through the drive shaft 7 to the propulsion unit 6. At the same time, the rotation is transmitted through the pulley 11, cam belt 16, and pulleys 14,15 to the camshafts 13,14, and the propeller 9 of the propulsion unit 6 is rotated to produce required propulsive forces. At the same time, the camshafts 13,14 are rotated to open and close intake and exhaust valves (not shown) according to appropriate timing sequence, and to exchange gas in the cylinders No. 1 to No. 4.

When the engine is idling with the throttle valves fully closed, the intake air drawn into the silencer 18 bypasses the throttle valves and flows from the ISC 32 through the rubber hoses 33, 34 to the intake pipes 21, further through the intake pipes 21 to the respective cylinders to produce air-fuel mixture. At that time the ECU (not shown) feedback-controls the opening of the ISC valve of the ISC 32 according to the difference between the actual engine revolution detected with a revolution sensor (not shown) and a target idling revolution to control the rates of intake air supplied to the cylinders No. 1 to No. 4 so that the actual engine revolution agrees with the target idling revolution.

The engine revolution during idling is controlled as described above. In this embodiment, one ISC 32 is provided and the total cross-sectional area of the rubber hoses 33,34 is determined to be greater than or equal to the inlet cross-sectional area of the ISC 32.

When the total cross-sectional area of the rubber hoses 33 and 34 is set to be greater than or equal to the inlet cross-sectional area of the ISC 32, velocity of the intake air flowing through the rubber hoses 33 and 34 during idling are reduced, the intake pressures to the cylinders No. 1 to No. 4 are approximately equalized, and it is possible to control the intake amounts to the cylinders No. 1 to No. 4 with a single control map. Therefore, the idling speed can be controlled in a stabilized manner using a single idling speed control device, even if a constitution is employed in which each cylinder is provided with an independent throttle valve as in this embodiment.

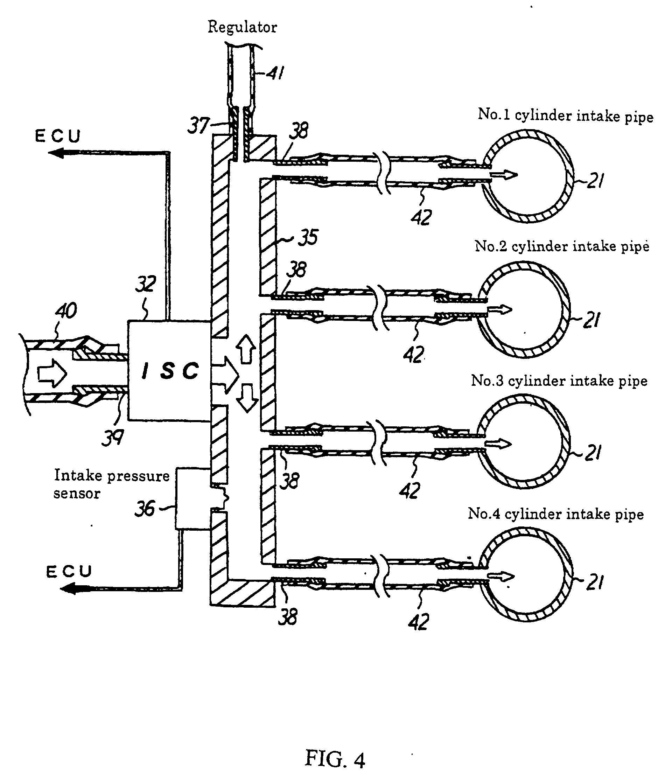

Now the second embodiment will be described in reference to FIG. 4 which shows the constitution of the idling speed control system of the second embodiment of the invention.

In this embodiment, an air rail 35 is provided which is common to the cylinders No. 1 to No. 4 of the 4-cycle, 4-cylinder engine. The air rail 35 is provided with the ISC 32, an intake air pressure sensor 36, and joint pipes 37,38. To the inlet of the ISC 32 is attached a large diameter joint pipe 39 connected to a rubber hose 40 connecting to a silencer (not shown). The ISC 32 and the intake air pressure sensor 36 are electrically connected to an ECU (not shown).

A rubber hose 41 connecting to a regulator (not shown) for controlling fuel pressure is connected to the joint pipe 37.

One end of rubber hoses 42 constituting bypass pipes is respectively connected to the four joint pipes 38, and the other ends of the rubber hoses 42 are respectively connected to the intake pipes 21 of the cylinders No. 1 to No. 4.

In this embodiment, the total cross-sectional area of the rubber hoses 42 is made greater than or equal to the inlet cross-sectional area of the ISC 32, and also the cross-sectional area of the rubber hoses 42 is made greater than the cross-sectional area of the joint pipe 38.

Therefore, also in this embodiment, the same effect as with the first embodiment is provided: velocity of the intake air flowing through the rubber hoses 42 during idling are reduced, the intake pressures to the cylinders No. 1 to No. 4 are approximately equalized, and it is possible to control the intake amounts to the cylinders No. 1 to No. 4 with a single control map.

As is clear from the above description, according to the invention, in an idling speed control system for multiple-cylinder internal combustion engine wherein each cylinder has an independent throttle valve, with the engine having an idling speed control device for controlling the rate of intake air supplied, while bypassing each throttle valve, to the intake pipe of each cylinder when the engine is idling, a single idling revolution control device is provided, and the total cross-sectional area of the bypass pipes connecting the idling speed control device to intake pipes of respective cylinders is made not smaller than the cross-sectional area of the inlet of the idling speed control device. As a result, the following effect is provided: the velocity of the intake air flowing through the bypass pipes during idling are reduced the intake air pressures in the respective cylinders are nearly equal to each other, and it makes possible to control the intake air amounts for the respective cylinders using a common control map. As a result, the idling speed can be controlled in a stabilized manner using a single idling speed control device, even if a constitution is employed in which each cylinder is provided with an independent throttle valve.

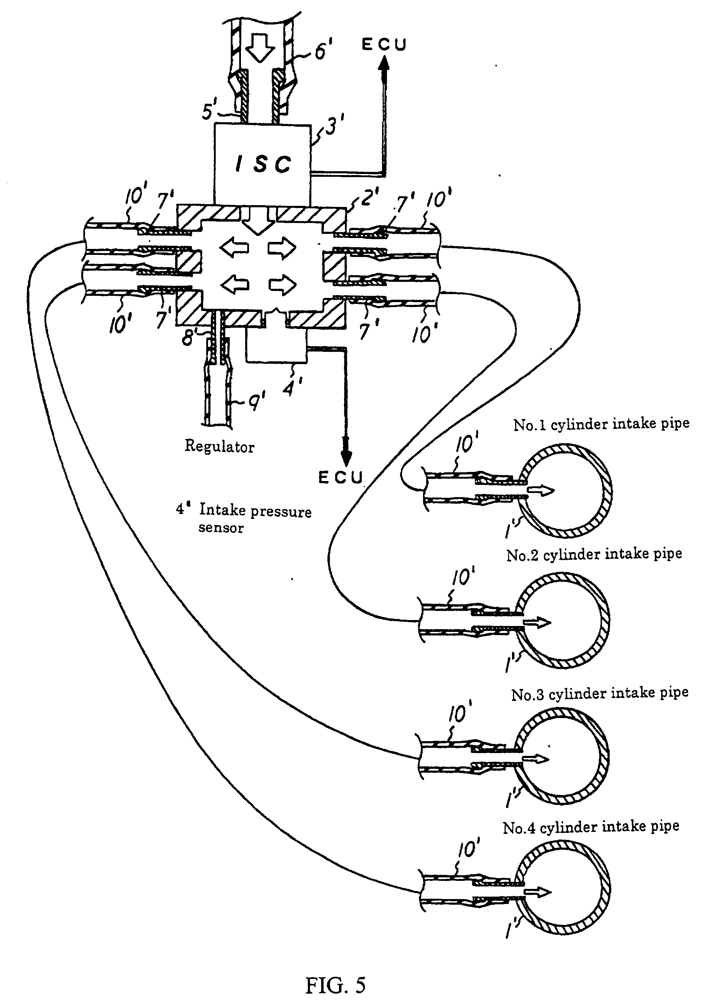

Further embodiments will now be described with respect to FIGs. 5 to 10.

FIG. 5 shows a system constitution of an idling speed control system according to the first embodiment of the invention. This idling speed control system is provided in a multiple-cylinder engine for outboard motors.

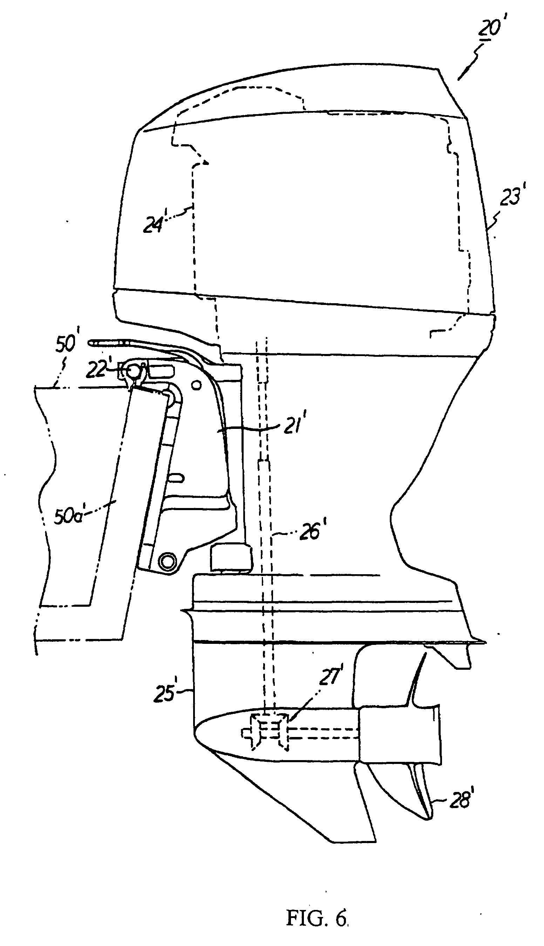

Here, the constitution of the outboard motor is roughly described in reference to FIG. 6.

FIG. 6 is a side view of an outboard motor 20', mounted to a stem board (transom) 50a' of a hull 50' using a clamp bracket 21', for up and down swinging about a tilt shaft 22', and with a multiple-cylinder engine 24' accommodated in an upper cowling 23'.

In the lower part of the outboard motor 20' is provided a propulsion unit 25' comprising with a drive shaft 26' driven for rotation with the multiple-cylinder internal combustion engine 24', a forward-reverse run changing mechanism 27' for changing the rotating direction of the drive shaft 26', and a propeller 28' to which the rotation is transmitted through the forward-reverse run changing mechanism 27'.

The multiple-cylinder internal combustion engine is of a fuel injection type with four-cycle, in-line, four cylinders, with the four cylinders disposed one under another (numbered from top down as No. 1 to No. 4) in a vertical row. As shown in FIG. 5, intake pipes 1' connected to the intake system of the cylinders No. 1 to No. 4 are disposed one under another in a vertical row.

Although not shown, throttle valves independent of each other are disposed in the middle positions of respective intake pipes 1'. The cylinder head of the engine is provided with injectors for injecting fuel into intake passages for respective cylinders according to appropriate timing sequence.

In the idling speed control system of this embodiment, a single air chamber 2' shared with the No. 1 to No. 4 cylinders of the engine is disposed near the intake pipes 1'. An idling speed control device (hereinafter abbreviated to ISC) 3' is attached to the upper part of the air chamber 2'. To the lower part of the air chamber 2' is attached an intake air pressure sensor 4'. A large diameter joint pipe 5' is connected to the inlet of the ISC 3'. A rubber hose 6' connected to a silencer (not shown) is connected to the joint pipe 5'. The ISC 3' and the intake air pressure sensor 4' are electrically connected to an engine control unit (not shown, ECU as abbreviated).

To the opposing sides of the air chamber 2' are attached joint pipes 7', two for each side. To the underside of the air chamber 2' is attached a joint pipe 8'. A rubber hose 9' connected to a regulator (not shown) for controlling fuel pressure is connected to the joint pipe 8'. One end of each of four flexible rubber hoses 10' constituting a bypass pipe is connected to each of the four joint pipes 7'. The other end of each of four flexible rubber hoses 10' is connected to each of the intake pipes 1' of each of the cylinders No. 1 to No. 4. Incidentally in this embodiment, the total cross-sectional area of the rubber hoses 10' is made more than the cross-sectional area of the inlet of the ISC 3', and the cross-sectional area of each rubber hose 10' is made not less than the cross-sectional area of each joint pipes 7'.

With the constitution described above, the flow rate of the intake air (fresh air) drawn in to the silencer (not shown) is controlled as the throttle valves of the cylinders No. 1 to No. 4 are simultaneously opened and closed by throttling operation during loaded operation of the engine. The intake air passing through the throttle valves flows through intake pipes 1' to the intake passages formed in the cylinder head where the intake air mixes with fuel injected from injectors according to appropriate timing sequence to form air-fuel mixture of a specified air-fuel ratio. When intake valves (not shown) of the cylinders No. 1 to No. 4 are opened, the air-fuel mixture is drawn into the cylinders and subjected to combustion.

When the engine is idling with the throttle valves fully closed, the intake air drawn into the silencer bypasses the throttle valves and flows from the ISC 3' into the air chamber 2', from the air chamber 2' through the rubber hoses 10' to the intake pipes 1', further through the intake pipes 1 to the cylinders No. 1 to No. 4 to produce air-fuel mixture. Here, the ECU (not shown) feedback-controls the opening of the idling speed control valve (ISC valve) of the ISC according to the difference between the actual engine revolution detected with a revolution sensor (not shown) and a target idling revolution to control the rates of intake air supplied to the cylinders No. 1 to No. 4 so that the actual engine revolution agrees with the target idling revolution.

The idling engine revolution is controlled as described above. In this embodiment, the intake air with its flow rate controlled with the single ISC 3' is introduced into the single air chamber 2' and from there to respective intake pipes 1' through the rubber hoses 10'. As a result, intake air pressures are almost equal from cylinder No. 1 to cylinder No. 4. This makes it possible to control the amounts of intake air to the cylinders No. 1 to No. 4 with a single control map and the idling revolution in a stabilized manner with a single ISC 3' even if independent throttle valves are provided for the respective cylinders.

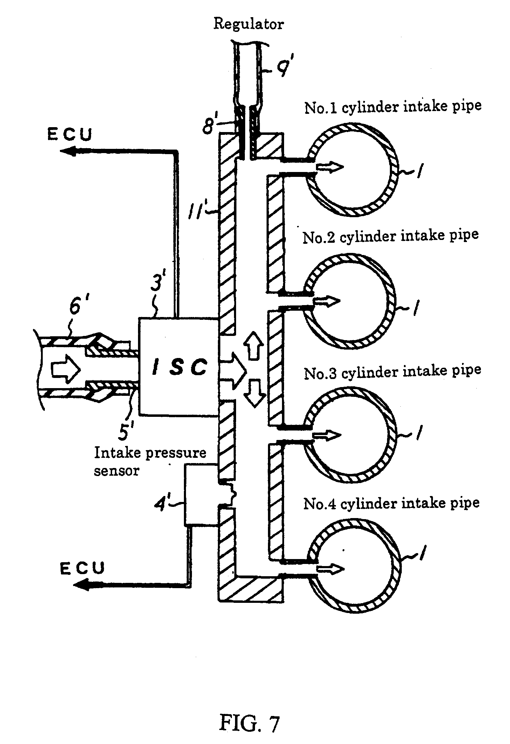

Next, the fourth embodiment of the invention will be described in reference to FIG. 7. FIG. 7 shows a system constitution of an idling speed control system according to the fourth embodiment of the invention. In FIG. 7, the same parts as those shown in FIG. 5 are provided with the same symbols and their explanations are omitted.

In this embodiment, an air rail 11' shared with the cylinders No. 1 to No. 4 of a 4-cycle, 4-cylinder engine, with the cylinders disposed one under another in a vertical row is disposed to extend in the vertical direction, with the ISC 3' attached to the middle height position of the air rail 11', and with an intake air pressure sensor 4' attached under the ISC 3'. A joint pipe 8' is attached to the upper part of the air rail 11'. A rubber hose 9' connected to a regulator (not shown) for controlling the fuel pressure is connected to the joint pipe 8'.

In this embodiment, the air rail 11' is directly connected to the intake pipes 1' through metallic pipes 12'.

Therefore, in this embodiment too, when the engine is idling, the intake air with its flow rate controlled with the single ISC 3' is introduced to the common air rail 11' and from there to respective intake pipes 1' through the metallic pipes 12'. As a result, pressures in the No. 1 to No. 4 cylinders are approximately the same each other, and the same effect as the previous, first embodiment is provided.

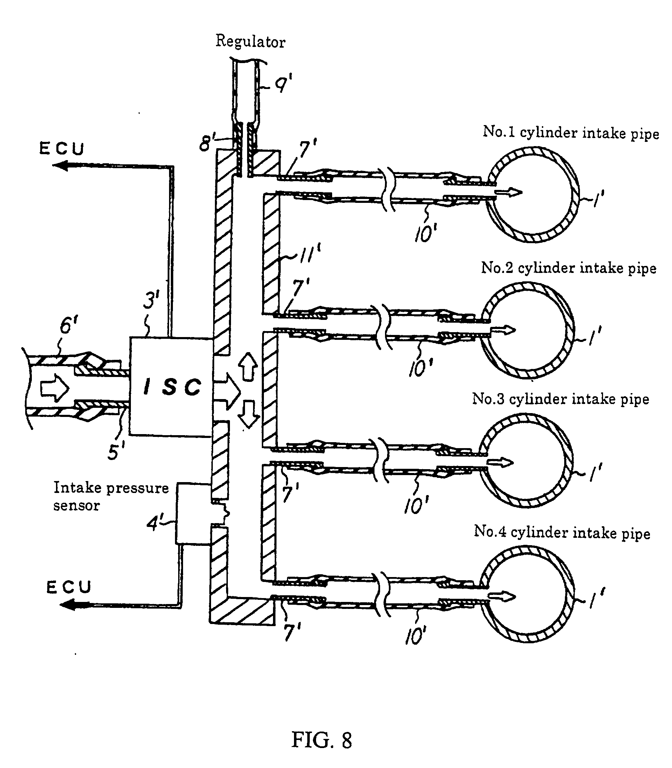

Next will be described the fifth embodiment of the invention in reference to FIG. 8. FIG. 8 shows a constitution of an idling speed control system of the fifth embodiment of the invention. In the figure, the same components as those shown in FIGs. 5 and 7 are provided with the same symbols and the same explanations are not repeated.

The constitution of this embodiment is the same as that of the fourth embodiment, except that the air rail 11' is connected to the intake pipes 1' through flexible rubber hoses 10'.

With this embodiment, when the engine is idling, the air with its flow rate controlled with the single ISC 3' is introduced into the common, single air rail 11', and from there through the rubber hoses 10' into respective intake pipes 1'. As a result, intake air pressures in the No. 1 to No. 4 cylinders are approximately the same each other to produce the same effect as the first embodiment.

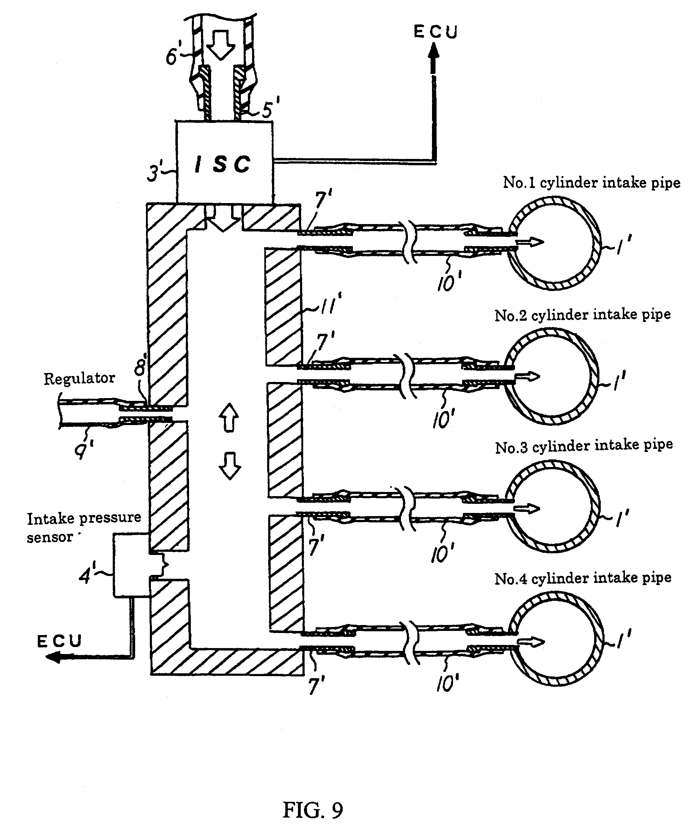

Next, the sixth embodiment will be described in reference to FIG. 9. FIG. 9 shows a constitution of an idling speed control system of the sixth embodiment of the invention. In FIG. 9, the same elements as those shown in FIG. 8 are provided with the same symbols and their explanations are omitted.

The constitution of this embodiment is the same as that of the fifth embodiment, except that the ISC 3' is attached to the upper part of the air rail 11', the joint pipe 8' is attached to a middle height position on the air rail 11', and the rubber hose 9' connected to the regulator (not shown) for controlling the fuel pressure is connected to the joint pipe 8'.

While the same effect as the fifth embodiment is also provided by this embodiment, since the ISC 3' is attached to the top of the air rail 11' in particular in this embodiment, an effect is also provided that a high density of intake air is introduced at a relatively low temperature that is at about the ambient air temperature.

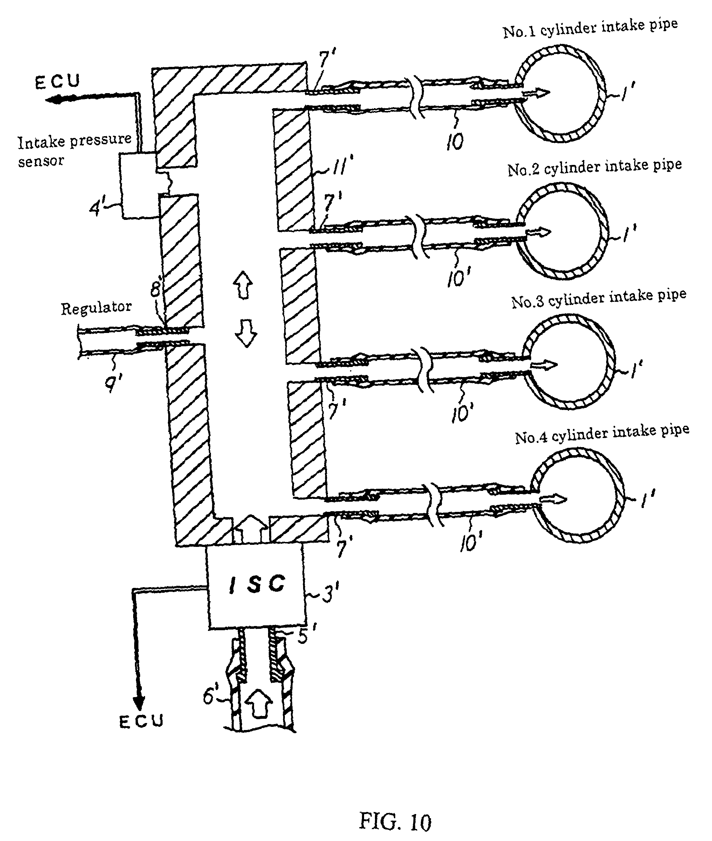

Next, the seventh embodiment will be described in reference to FIG. 10. FIG. 10 shows a constitution of an idling speed control system related to the seventh embodiment of the invention. Also in FIG. 10, the same elements as those shown in FIG. 9 are provided with the same symbols and their descriptions are omitted.

The constitution of this embodiment is the same as that of the sixth embodiment, except that the ISC 3' is attached to the lower part of the air rail 11', and an intake air pressure sensor 4' is attached to the upper part of the air rail 11'.

Therefore, while the same effect as the fifth embodiment is provided, in particular in this embodiment, since the ISC 3' is attached to the lower part of the air rail 11', an effect is also obtained that the ISC 3' does not project above the engine so that the engine can be made compact.

As is clear from the above description of this invention, since the arrangement is made to introduce the intake air with its flow rate controlled with the single idling speed control device into the single air chamber shared with all the cylinders, and to introduce into respective intake pipes, through the bypass pipes intake pressures in respective cylinders are approximately the same each other. This makes it possible to control the intake amounts to respective cylinders with a common control map. As a result, an effect is obtained that stabilized idling speed control is possible with a single idling revolution control device even if throttle valves independent of each other are provided for respective cylinders.

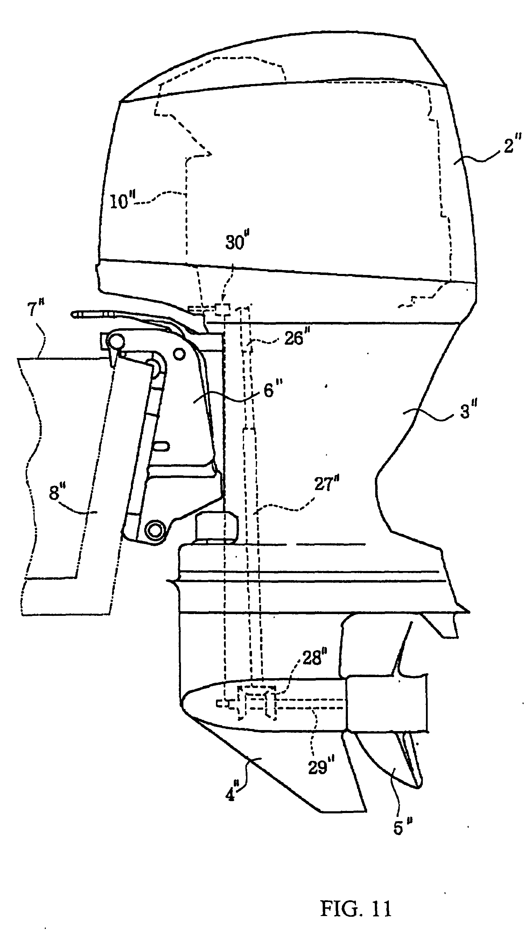

Other embodiments will now be described with respect to FIGs. 11 to 16.

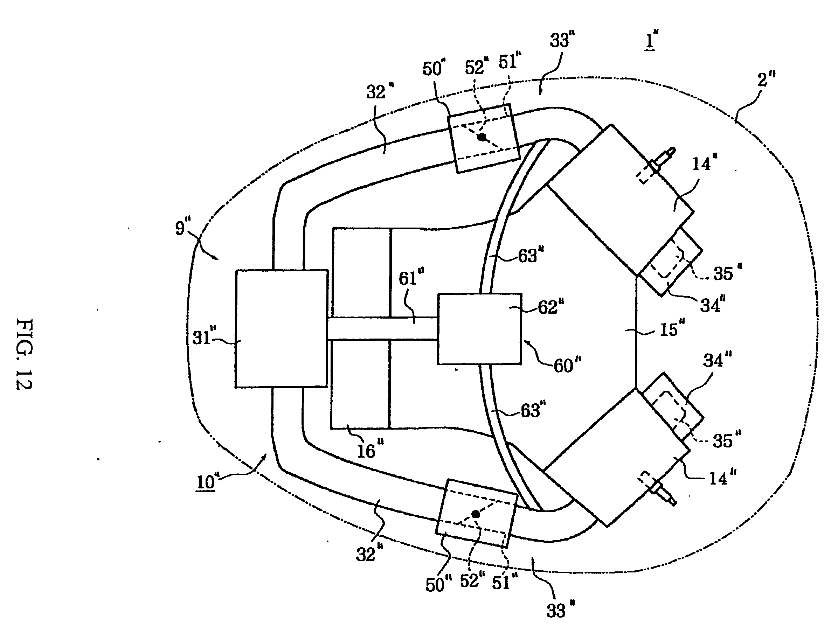

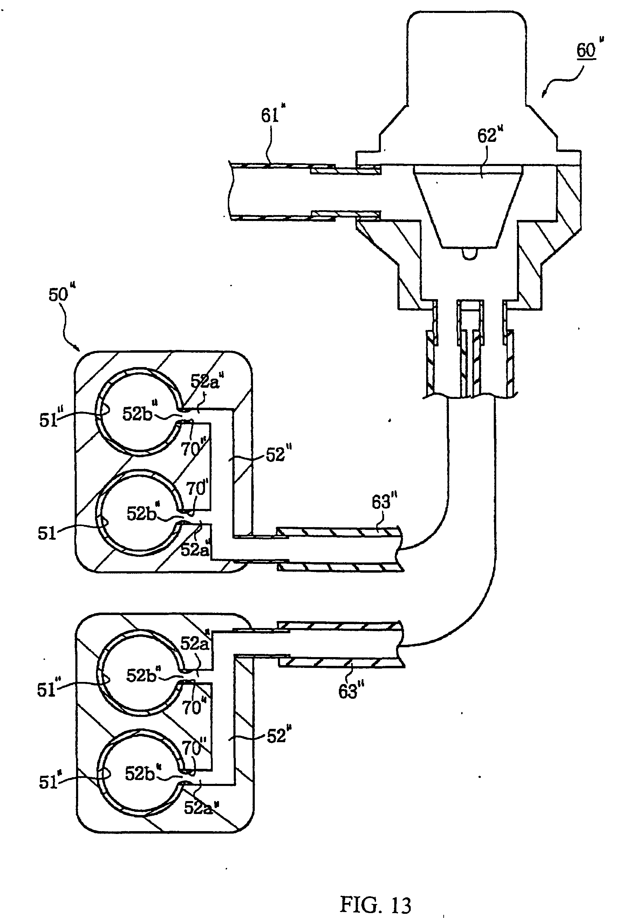

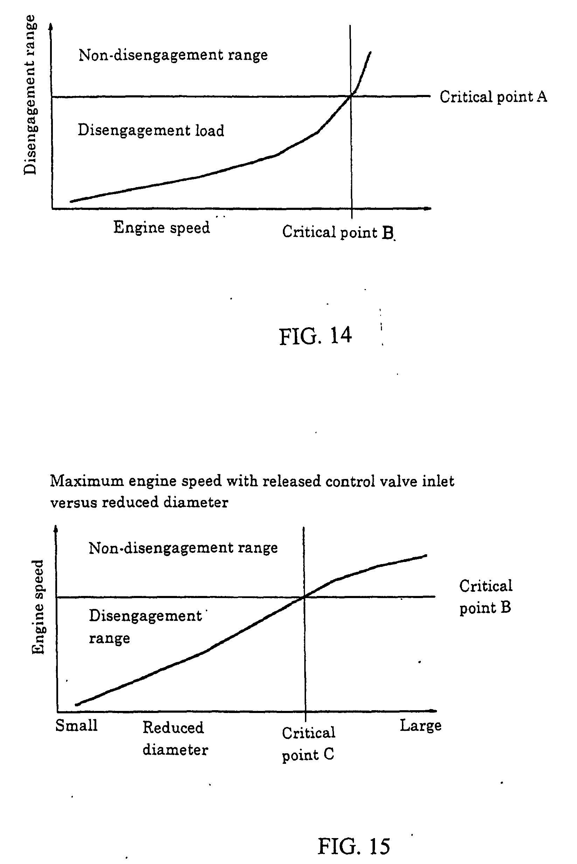

FIG. 11 is a side view of a small vessel provided with an outboard motor. FIG. 12 is a plan view of the engine section of the outboard motor. FIG. 13 shows a cross-section of an idling speed control device. FIG. 14 shows the relation between engine speed and gear disengagement load. FIG. 15 shows the relation between reduced diameter and engine speed.

In an outboard motor 1" as a propulsion unit comprises various components housed in a housing made up of a top cowling 2", an upper case 3", and a lower case 4". A propeller 5" is attached to the lower case 4". The outboard motor is attached for vertical and lateral rotation to a stem plate 8" of a hull 7" through an attachment member 6".

In the outboard motor 1", a 4-cycle, V-4 cylinder engine 10" as an engine for a propulsion unit is housed in the top cowling 2". The main part of the engine 10" is constituted by connecting together a cylinder head 14", a cylinder block 15", and a crankcase 16" in the fore-and-aft direction of a vessel, and disposed so that the crankcase 16" side is the front and the cylinder head 14" side is the rear.

A crankshaft 26" with its rotation axis being set upright is rotatably supported between the cylinder block 15" and the crankcase 16". The torque of the crankshaft 26" is transmitted to the propeller shaft 29" through a drive shaft 27", and a forward-reverse switching mechanism 28". The propeller shaft 29" rotates a propeller 5". The forward-reverse switching mechanism 28" is operated through a shift operation mechanism 30" to perform shifting operation, or switching between forward and reverse drive.

A surge tank 31" serving as an air introducing section of an air intake system (A) may be placed in front of the crankcase 16" of the engine 10". Intake pipes 32" are disposed to extend right and left from the surge tank 31". The intake pipes 32" are respectively connected to the cylinders of the cylinder head 14". Each of the intake pipes 32" is provided with a throttle device 33". Exhaust passages (not shown) spaced by a vertical distance from each other and opening to respective cylinders are formed in the cylinder head 14" of the engine 10". Exhaust gas from the exhaust passages is discharged through a collective exhaust passage 35" formed with the cylinder head 14" and the outer cover 34".

In the throttle body 50" of the throttle device 33" are formed intake passages 51" corresponding to respective cylinders, and provided with throttle valves 52" for opening and closing the intake passages 51". The throttle valves 52" varies its opening according to the engine speed to control the intake air amount.

The engine 10" is provided with an idling speed control device 60". The idling speed controller 60" is constituted with a bypass pipe 61" connected to a surge tank 31", a control valve 62" disposed in the bypass pipe 61", and bypass pipes 63" for connecting the control valve 62" to bypass passages 59" of the respective throttle bodies 50". The bypass passage 59" of each throttle body 50" is branched and connected to an intake passage 51" through a branch bypass passage 59a". The branch bypass passage 59a" is connected to the intake passage 51" on the more downstream side than the throttle valve 52".

In this embodiment, the idling speed control device 60" is located in the upper part of the V-type engine 10", the control valve 62" constituting the idling speed control device 60" is in the upper central part, the bypass pipes 63" extend from the control valve 62" equally right and left and are connected to the intake pipes 32" on the downstream sides of the throttle bodies 50". This makes it possible to draw intake air equally right and left and to arrange those components compactly within the width of the engine.

When the throttle valves 52" of the No. 1 to No. 4 cylinders are opened and closed simultaneously by the throttling operation during loaded operation of the 4-cylinder engine 10", the flow rate of (fresh) air drawn in through the throttle valves 52" is regulated. The air passing through the throttle valves flows through the intake pipes 32" to the intake passages formed in the cylinder head, and mixes with fuel injected from injectors according to appropriate timing sequence to form mixture of specified air-fuel mixture ratio. The mixture is drawn into the No. 1 to No. 4 cylinders when intake valves (not shown) open at the cylinders, and burned.

During idling with the throttle valves 52" fully closed, the intake air drawn into the surge tank 31" bypasses the throttle valves 52" of the No. 1 to No. 4 cylinders, flows through the bypass pipes 61" of the idling speed control device 60", sent to the bypass passages 59" of the throttle bodies 50" through the bypass pipes 63" by the control of the control valve 62", and through the branch bypass passage 59a" to the intake passage 51", and used for forming air-fuel mixture.

Here, an ECU (not shown) controls the intake air amount supplied to the No. 1 to No. 4 cylinders by the feedback control of the opening of the control valve 62" of the idling speed control device 60" according to the difference between the actual engine speed detected with a revolution sensor (not shown) and a target idling speed, so that the actual engine speed agrees with the target idling speed.

In the idling speed control device 60", a reduced diameter section 70" is provided between the control valve 62" and the intake passage side opening 59b" of the bypass passage 59". In this embodiment, the reduced diameter section 70" is provided at the intake passage connecting section 53". Providing it between the control valve 62" and the bypass passage opening 59b" on the intake passage side makes it possible to prevent engine speed from increasing beyond a specified value with the idling speed control device 60", and to prevent engine speed from increasing as a result of a large amount of air supplied in the case the bypass piping is broken, or the piping comes off.

The diameter of the reduced diameter section 70" is in the range that results in the engine speed at which shifting operation of the engine 10" is possible. In other words, the forward-reverse switching mechanism 28" in most cases uses the dog clutch. In that case, if the intake air amount is increased too much with the idling speed control device 60" and the engine speed increases as shown in FIG. 14, the gear disengagement load increases and the shifting operation becomes impossible. With the major trend of using the dog clutch in the forward-reverse switching mechanism on one hand, and the great disengagement load at a high engine speed on the other, shifting from the in-gear state to the out-of-gear state becomes more difficult. When the disengagement load or the engine speed exceeds the critical point (A) or (B), disengagement becomes impossible. The critical points (A) and (B) depend on the forward-reverse switching mechanism 28", the shape of the dog clutch, torque produced with the engine 10", and other factors, etc.

If a large amount of air irrespective of the driver's intention is supplied when the piping such as the bypass pipe 63" is broken or comes off, or the control valve 62" is broken or sticks, the shifting load increases and the shifting operation becomes impossible.

Therefore, it is arranged that too much amount of air is not supplied by setting the diameter of the reduced diameter section 70" within a range in which shifting operation of the engine is possible. In other words, diameter of the reduced diameter section 70" is set so that the upper limit of the intake air amount supplied from the idling speed control device 60" is restricted with the reduced diameter section 70" formed in each intake passage and that the engine speed does not increase under any circumstances to the range in which the shifting operation is disabled.

As shown in FIG. 15, the amount of air supplied to each intake passage increases with the increase in the reduced diameter, and the maximum speed when the idling speed controller 60" is released increases. Here, if the reduced diameter is set to a value smaller than the critical point (C) that brings the engine speed below the critical point (B), and that makes it possible to secure the amount of air when the engine is started or the engine is cold, or when the engine is in a warm-up operation, or to control the idling speed in the neutral gear (out-of-gear), or in-gear, or to prevent the engine from stalling during deceleration, then the engine speed never enters the range that disables disengagement.

In this embodiment, since the reduced diameter section 70" is provided at the intake passage connecting section 53", air can be taken into respective cylinders in a stabilized manner with less influence among the cylinders even if the idling speed is controlled for a plural number of cylinders.

The intake passages for drawing intake air respectively into the No. 1 to No. 4 cylinders are provided with the throttle valves 52", and the amounts of intake air supplied to the intake passages 51" of the plural number of cylinders are controlled with the idling speed control device 60". The intake air is supplied from the idling speed control device 60" to each intake passage 51" through each bypass passage through the reduced diameter section 70" provided before the intake passage. Therefore, the engine speed never increases to the range that disables the shifting operation because the amount of air supplied does not exceed the limit set with the reduced diameter section 70", even in the case the bypass pipe is broken or the piping comes off.

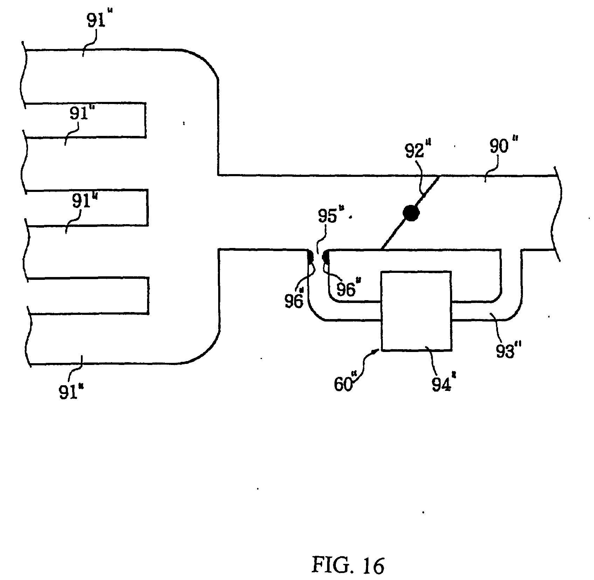

FIG. 16 roughly shows a constitution of the idling speed control device. In this embodiment, an intake passage 90" branches into a plural number of branch intake passages 91" through which air is drawn to each cylinder. A throttle valve 92" is provided at a position in the intake passage 90" before branching. In the idling speed control device 60", a bypass passage 93" is provided to bypass the throttle valve 92". The bypass passage 93" is provided with a control valve 94". A reduced diameter section 96" is provided between the control valve 94" and the opening 95" on the intake passage side of the bypass passage 93".

As described above, the intake passage 90" branches into a plural number of branch intake passages 91" from which intake air is drawn to respective cylinders. The single idling speed control device 60" controls the amount of air supplied to the intake passage 90" while bypassing the throttle valve 92" during idling, of the plural number of cylinders. Engine speed never rises to a range that disables shifting operation because air is not supplied to each cylinder in excess of the amount that is set with the reduced diameter section 96" by means of the simple structure using a single idling speed control device 60", even if the bypass piping is broken or the piping comes off.

With the embodiment as described above, since the reduced diameter section is provided between the control valve and the bypass passage opening on the intake passage side, the idling speed control device prevents the engine speed from increasing beyond a specified value. Even if the bypass pipe is broken or the piping comes off, intake air is prevented from being supplied in a large amount, and so the engine speed is prevented from increasing.

With another embodiment, the diameter of the reduced diameter section is in the range that makes it possible to run the engine at a speed at which the shifting operation is possible. Therefore, it is possible to arrange that too much amount of air is not supplied.

With a further embodiment, a bypass passage is formed to communicate with the intake passage on the downstream side of the throttle body, and the reduced diameter section is provided in the bypass passage. Therefore, even if the bypass pipe provided with the control valve connected to the bypass passage is broken or deteriorates, the reduced diameter section works securely to prevent air from being supplied in a large amount to the intake passage on the downstream side of the throttle body.

With a still further embodiment, bypass passages are connected to the intake passages of the plural number of cylinders, and the reduced diameter section is provided at the intake passage connecting section of each of the bypass passages. Therefore, even when a plural number of cylinders are controlled for the engine speed, air is drawn independently to the respective cylinders, with each cylinder being less affected by other cylinder, and intake in each cylinder is stabilized.

With another embodiment, the intake passages for drawing air to respective cylinders independently of each other are respectively provided with the throttle valves. The amounts of air supplied to the intake passages of the plural number of cylinders are controlled with the idling speed control device. Air from the idling speed control device is led to each intake passage through each bypass passage and through the reduced diameter section provided before the intake passage. Air is not supplied in excess of the amount set with the reduced diameter section, even when the bypass pipe is broken or the piping comes off, and the engine speed never increases to such a range that disables the shifting operation.

With a further embodiment, the intake passage branches into a plural number of branch intake passages from which intake air is drawn to respective cylinders. The single idling speed control device controls the amount of air supplied to the intake passage while bypassing the throttle valve during idling of the plural number of cylinders. Engine speed never rises to a range that disables shifting operation because air is not supplied to each cylinder in excess of the amount that is set with the reduced diameter section by means of the simple structure using a single idling speed control device, even if the bypass piping is broken or the piping comes off.

## Claims

1. An idling speed control system for a multiple-cylinder internal combustion engine (5), wherein each cylinder (1-4) has an independent throttle valve (52",92") for controlling a rate of intake air supplied, for bypassing each throttle valve (52",92"), to an intake pipe (21) of each cylinder (1-4) when said engine (5) is idling, comprising a single idling speed control device (32,3') having an inlet, and an air chamber (2') or air rail (11',35) having bypass pipes (61",63") for connecting said idling speed control device (32,3') to said intake pipes (21) of respective cylinders (1-4), **characterized in that** said single idling speed control device (32,3') is attached to said air chamber (2') or air rail (11',35), and an intake air pressure sensor (36,4') is also attached to said air chamber (2') or air rail (11 ',35), and **in that** a total cross-sectional area of said bypass pipes (61",63") is made greater than or equal to a cross-sectional area of said inlet of said idling speed control device (32,3').

2. An idling speed control system according to claim 1, **characterized in that** said bypass pipe (61",63") is constituted with a flexible hose (42) connected through a joint pipe (38) to said idling speed control device (32,3'), and that a cross-sectional area of said flexible hose (42) is made greater than a cross-sectional area of said joint pipe (38).

3. An idling speed control system according to claim 1 or 2, **characterized in that** said multiple-cylinder internal combustion engine (5) is an engine for outboard motors in which a plurality of cylinders are arranged one over another in a vertical direction, and that said idling speed control device (32,3') is provided inside of said intake pipe (21) of each cylinder (1-4).

4. An idling speed control system according to at least one of the preceding claims 1 to 3, **characterized in that** a regulator for controlling fuel pressure is connected to said air chamber (2') or air rail (11',35), respectively.

5. An idling speed control system according to at least one of the preceding claims 1 to 4, **characterized in that** said air chamber (2') is constituted with said air rail (11') extending in a vertical direction in a vicinity of said intake pipes (1'), disposed one over another in said engine (5), and said idling speed control device (32,3') is attached to an upper part of said air rail (11').

6. An idling speed control system according to at least one of the preceding claims 1 to 4, **characterized in that** said air chamber (2') is constituted with said air rail (11') extending in a vertical direction in a vicinity of said intake pipes (1'), disposed one over another in said engine (5), and said idling speed control device (32,3') is attached to a middle height position of said air rail (11').

7. An idling speed control system according to at least one of the preceding claims 1 to 4, **characterized in that** said air chamber (2') is constituted with said air rail (11') extending in a vertical direction in a vicinity of said intake pipes (1'), disposed one over another in said engine (5), and said idling speed control device (32,3') is attached to a lower part of said air rail (11').

8. An idling speed control system according to at least one of the preceding claims 1 to 7, **characterized in that** a control valve (62") is disposed in a bypass passage (59") and that a reduced diameter section (70",96") is provided between said control valve (62") and an opening on an intake passage side of said bypass passage (59").

9. An idling speed control system according to claim 8, **characterized in that** a diameter of said reduced diameter section (70",96") is in a range that makes it possible to run said engine (5) at a speed at which shifting operation of said engine (5) is possible.

10. An idling speed control system according to claim 8 or 9, **characterized in that** said throttle valve (52",92") is provided at a throttle body (20,50"), a bypass passage (63",93") is formed to be connected to an intake passage (51",91") on a downstream side of said throttle body (20,50"), a bypass pipe (61",93") having said control valve (62") is connected to said bypass passage (63",93"), and said bypass passage (63",93") is provided with said reduced diameter section (70";96").

11. An idling speed control system according to claim 10, **characterized in that** said bypass passage (59") is connected to said intake passage (51") of a plurality of cylinders (1-4) and an intake passage connecting section (53") of said bypass passage (59") is provided with said reduced diameter section (70").

12. An idling speed control system according to claim 10 or 11, **characterized in that** said throttle valve (52";92") is provided in said intake passage (51";91") for independently drawing intake air into said plural number of cylinders (1-4), and an amount of intake air supplied to said intake passage (51";91") of said plural number of cylinders (1-4) is controlled with said idling speed control device (60").

13. An idling speed control system according to at least one of the preceding claims 10 to 12, **characterized in that** an intake passage (90") branches into a plural number of branch intake passages (91"), intake air is drawn from said branch intake passages (91") into respective cylinders (1-4), said throttle valve (92") is provided in said intake passage (90") before branching, and an amount of intake air supplied to said intake passage (90") is controlled with said idling speed control device (60").

## Patentansprüche

1. Leerlaufdrehzahl- Steuersystem für eine Mehrzylinder- Brennkraftmaschine (5), wobei jeder Zylinder (1- 4) ein unabhängiges Drosselventil (52", 92") hat, zum Steuern einer zugeführten Einlaßluftmenge, um jedes Drosselventil (52", 92") zu umgehen, zu einem Einlaßrohr (21) jedes Zylinders (1- 4), wenn der Motor im Leerlauf läuft, mit einer einzelnen Leerlaufdrehzahl- Steuervorrichtung (32, 3'), die einen Einlaß hat und eine Luftkammer (2') oder eine Luftschiene (11', 35) mit Bypassrohren (61", 63") aufweist, zum Verbinden der Leerlaufdrehzahl- Steuervorrichtung (32, 3') mit den Einlaßrohren (21) der jeweiligen Zylinder (1 - 4),
**dadurch gekennzeichnet, daß** die einzelne Leerlaufdrehzahl- Steuervorrichtung (32, 3') mit der Luftkammer (2') oder Luftschiene (11', 35) verbunden ist, und ein Einlaßluft- Drucksensor (36, 4') auch mit der Luftkammer (2') oder Luftschiene (11', 35) verbunden ist, und daß eine Gesamt- Querschnittsfläche der Bypassrohre (61", 63") größer oder gleich einer Querschnittsfläche des Einlasses der Leerlaufdrehzahl-Steuervorrichtung (32, 3') gemacht ist.

2. Leerlaufdrehzahl- Steuersystem nach Anspruch 1, **dadurch gekennzeichnet, daß** das Bypassrohr (61", 63") mit einem flexiblen Schlauch (42) gebildet ist, verbunden durch ein Verbindungsrohr (38) mit der Leerlaufdrehzahl- Steuervorrichtung (32, 3'), und daß eine Querschnittsfläche des flexiblen Schlauches (42) größer gemacht ist, als eine Querschnittsfläche des Verbindungsrohres (38).

3. Leerlaufdrehzahl- Steuersystem nach Anspruch 1 oder 2, **dadurch gekennzeichnet, daß** die Mehrzylinder- Brennkraftmaschine (5) ein Motor für Außenbordmotoren ist, in denen eine Mehrzahl von Zylindern in vertikaler Richtung, einer über dem anderen, angeordnet sind, und daß die Leerlaufdrehzahl- Steuervorrichtung (32, 3') innerhalb des Einlaßrohres (21) jedes Zylinders (1 - 4) vorgesehen ist.

4. Leerlaufdrehzahl- Steuersystem nach zumindest einem der vorhergehenden Ansprüche 1 bis 3, **dadurch gekennzeichnet, daß** ein Regler zum Steuern des Kraftstoffdruckes jeweils mit der Luftkammer (2') oder eine Luftschiene (11', 35) verbunden ist.

5. Leerlaufdrehzahl- Steuersystem nach zumindest einem der vorhergehenden Ansprüche 1 bis 4, **dadurch gekennzeichnet, daß** die Luftkammer (2') mit der Luftschiene (11') gebildet ist, die sich in vertikaler Richtung in einer Nähe der Einlaßrohre (1') erstreckt, angeordnet in dem Motor (5) eines über dem anderen, und die Leerlaufdrehzahl- Steuervorrichtung (32, 3') mit einem oberen Teil der Luftschiene (11') verbunden ist.

6. Leerlaufdrehzahl- Steuersystem nach zumindest einem der vorhergehenden Ansprüche 1 bis 4, **dadurch gekennzeichnet, daß** die Luftkammer (2') mit der Luftschiene (11') gebildet ist, die sich in vertikaler Richtung in einer Nähe der Einlaßrohre (1') erstreckt, angeordnet in dem Motor (5) eines über dem anderen, und die Leerlaufdrehzahl- Steuervorrichtung (32, 3') an einer mittelhohen Position mit der Luftschiene (11') verbunden ist.

7. Leerlaufdrehzahl- Steuersystem nach zumindest einem der vorhergehenden Ansprüche 1 bis 4, **dadurch gekennzeichnet, daß** die Luftkammer (2') mit der Luftschiene (11') gebildet ist, die sich in vertikaler Richtung in einer Nähe der Einlaßrohre (1') erstreckt, angeordnet in dem Motor (5) eines über dem anderen, und die Leerlaufdrehzahl- Steuervorrichtung (32, 3') mit einem unteren Teil der Luftbahn (11') verbunden ist.

8. Leerlaufdrehzahl- Steuersystem nach zumindest einem der vorhergehenden Ansprüche 1 bis 7, **dadurch gekennzeichnet, daß** einSteuerventil (62") in einem Bypasskanal (59") angeordnet ist und daß ein Abschnitt (70", 96") mit verminderten Durchmesser zwischen dem Steuerventil (62") und einer Öffnung an der Einlaßkanalseite des Bypasskanales (59") vorgesehen ist.

9. Leerlaufdrehzahl- Steuersystem nach Anspruch 8, **dadurch gekennzeichnet, daß** ein Durchmesser des Abschnittes (70", 96") mit verminderten Durchmesser in einem Bereich ist, der es möglich macht, den Motor (5) bei einer Drehzahl zu betreiben, bei der der Schaltbetrieb des Motors (5) möglich ist.

10. Leerlaufdrehzahl- Steuersystem nach Anspruch 8 oder 9, **dadurch gekennzeichnet, daß** das Steuerventil (52", 92") an einem Drosselkörper (29, 50") vorgesehen ist, wobei ein Bypasskanal (63", 93")gebildet ist, um mit einem Einlaßkanal (51", 91") an einer stromabwärtigen Seite des Drosselkörpers (29, 50") verbunden zu sein, ein Bypassrohr (61", 93"), das das Steuerventil (62") hat, mit dem Bypasskanal (63", 93") verbunden ist, und der Bypasskanal (63", 93") mit dem Abschnitt (70"; 96") mit verminderten Durchmesser versehen ist.

11. Leerlaufdrehzahl- Steuersystem nach Anspruch 10, **dadurch gekennzeichnet, daß** der Bypasskanal (59") mit dem Einlaßkanal (51") einer Mehrzahl von Zylindern (1 - 4) verbunden ist und ein Einlaßkanal- Verbindungsabschnitt (53") des Bypasskanales (59") mit dem Abschnitt (70") mit verminderten Durchmesser versehen ist.

12. Leerlaufdrehzahl- Steuersystem nach Anspruch 10 oder 11, **dadurch gekennzeichnet, daß** das Drosselventil (52"; 92") in dem Einlaßkanal (51"; 91") zum unabhängigen Einsaugen der Einlaßluft in die mehrfache Anzahl von Zylindern (1 - 4) vorgesehen ist, und eine Ansaug- Luftmenge, zugeführt zu dem Einlaßkanal (51"; 91") der mehrfachen Anzahl von Zylindern (1- 4) mit der Leerlaufdrehzahl- Steuervorrichtung (60") gesteuert wird.

13. Leerlaufdrehzahl- Steuersystem nach zumindest einem der vorhergehenden Ansprüche 10 bis 12, **dadurch gekennzeichnet, daß** sich ein Einlaßkanal (90") in eine mehrfache Anzahl von Verzweigungseinlaßkanälen (91") verzweigt, Einlaßluft von den Verzweigungseinlaßkanälen (91") in die jeweiligen Zylinder (1 - 4) eingesaugt wird, das Drosselventil (92") in dem Einlaßkanal (90") vor dem Verzweigen vorgesehen ist, und eine Einlaßluftmenge, zugeführt zu dem Einlaßkanal (90"), mit der Leerlaufdrehzahl- Steuervorrichtung (60") gesteuert wird.

## Revendications

1. Un système de commande de la vitesse de ralenti d'un moteur à combustion interne (5) à plusieurs cylindres, dans lequel chaque cylindre (1 à 4) à un clapet d'étranglement (52", 92") indépendant, pour commander le débit d'air d'admission fourni, afin d'effectuer une dérivation de chaque clapet d'étranglement (52", 92"), vers un tuyau d'admission (21) de chaque cylindrique (1 à 4) lorsque ledit moteur (5) est au ralenti, comprenant un dispositif de commande de vitesse de ralenti (32, 3") unique, ayant une entrée et une chambre à air (2") ou une rampe à air (11', 35) comprenant des tuyau de dérivation (61", 63"), pour relier ledit dispositif de commande de vitesse de ralenti (32, 3') auxdits tuyaux d'admission (21) des cylindriques (1 à 4) respectifs, **caractérisé en ce que** ledit dispositif de commande de vitesse de ralenti (32, 3') unique est fixé sur ladite chambre à air (2') ou rampe à air (11', 35) et un capteur de pression d'air d'admission (36, 4') est également fixé sur ladite chambre à air (2') ou rampe à air (11', 35), et **en ce que** l'aire total de section transversale desdits tuyaux de dérivation (61", 63") est supérieure ou égale à l'aire de la section transversale de ladite entrée dudit dispositif de commande de vitesse de ralenti (32, 3').

2. Un système de commande de vitesse de ralenti selon la revendication 1, **caractérisé en ce que** ledit tuyau de dérivation (61", 63") est formé d'un tuyau flexible (42), relié par un tuyau de jonction (38) audit dispositif de commande de vitesse de ralenti (32, 3'), et **en ce que** l'aire de la section transversale dudit tuyau flexible (42) est supérieure à l'aire de la section transversale dudit tuyau de jonction (38).

3. Un système de commande de vitesse de ralenti selon la revendication 1 ou 2, **caractérisé en ce que** ledit moteur à combustion interne (5) à plusieurs cylindres est un moteur thermique prévu pour servir de moteur hors-bord, dans lequel une pluralité de cylindres sont agencés l'un sur l'autre en direction verticale, et **en ce que** ledit dispositif de commande de vitesse de ralenti (32, 3') est prévu à l'intérieur dudit tuyau d'admission (21) de chaque cylindre (1 à 4).

4. Un système de commande de vitesse de ralenti selon l'une des revendications 1 à 3 précédentes, **caractérisé en ce qu'**un régulateur pour commander de la pression de carburant est relié à ladite chambre à air (2') ou à ladite rampe à air (11', 35) respectivement.

5. Un système de commande de vitesse de ralenti selon au moins l'une des revendications 1 à 4 précédentes, **caractérisé en ce que** ladite chambre à air (2') est constituée avec ladite rampe à air (11') s'étendant en direction verticale à proximité desdits tuyaux d'admission (1') disposés l'un au-dessus de l'autre dans ledit moteur thermique (5) et ledit dispositif de commande de vitesse de ralenti (32, 3') est fixé sur une partie supérieure de ladite rampe à air (11').

6. Un système de commande de vitesse de ralenti selon au moins l'une des revendications 1 à 4 précédentes, **caractérisé en ce que** ladite chambre à air (2') est formée avec ladite rampe à air (11') s'étendant en direction verticale, à proximité desdits tuyaux d'admission (1'), disposés l'un au-dessus de l'autre dans ledit moteur thermique (5), et ledit dispositif de commande de vitesse de ralenti (32, 3') est fixé sur une position à mi-hauteur de ladite rampe à air (11').

7. Un système de commande de vitesse de ralenti selon au moins l'une des revendications 1 à 4 précédentes, **caractérisé en ce que** ladite chambre à air (2') est formée avec ladite rampe à air (11') s'étendant en direction verticale à proximité desdits tuyaux d'admission (1') disposés les uns au-dessus des autres dans ledit moteur thermique (5) et ledit dispositif de commande de vitesse de ralenti (32, 3') est fixé sur une partie inférieure de ladite rampe à air (11').

8. Un système de commande de vitesse de ralenti selon au moins l'une des revendications 1 à 7 précédentes, **caractérisé en ce qu'**une soupape de commande (62") est disposée dans un passage de dérivation (59"), et **en ce qu'**une section (70", 96") à diamètre réduit est prévue entre ladite soupape de commande (62") et une ouverture sur un côté de passage d'admission dudit passage de dérivation (59").

9. Un système de commande de vitesse de ralenti selon la revendication 8, **caractérisé en ce que** le diamètre de ladite section (70", 96") de diamètre réduit est dans la fourchette rendant possible le fonctionnement dudit moteur thermique (5) à une vitesse à laquelle il est possible d'effectuer une opération de manoeuvre dudit moteur (5).

10. Un système de commande de vitesse de ralenti selon la revendication 8 ou 9, **caractérisé en ce que** ledit clapet d'étranglement (52", 92") est prévu sur un corps d'étranglement (20, 50"), un passage de dérivation (63", 93") est formé, devant être relié à un passage d'admission (51", 81") sur le côté aval dudit corps d'étranglement (20, 50"), un tuyau de dérivation (61", 93") ayant ladite soupape de commande (62") est relié audit passage de dérivation (63", 93") et ledit passage de dérivation (63", 93") est muni de ladite section (70"; 96") à diamètre réduit.

11. Un système de commande de vitesse de ralenti selon la revendication 10, **caractérisé en ce que** ledit passage de dérivation (59") est relié audit passage d'admission (51") d'une pluralité de cylindres (1 à 4) et à un passage d'admission reliant la section (53") dudit passage de dérivation (50") est prévu avec ladite section (70") à diamètre réduit.

12. Un système de commande de vitesse de ralenti selon la revendication 10 ou 11, **caractérisé en ce que** ledit clapet d'étranglement (52", 92") est prévu dans ledit passage d'admission (50", 91") pour aspirer indépendamment de l'air d'admission dans la pluralité de cylindres (1 à 4), et une quantité d'air d'admission, fournie audit passage d'admission (51", 91") de ladite pluralité de cylindres (1 à 4), est commandée avec ledit dispositif de commande de vitesse de ralenti (60").

13. Un système de commande de vitesse de ralenti selon au moins l'une des revendications 10 à 12 précédentes, **caractérisé en ce qu'**un passage d'admission (90") se ramifie en une pluralité de passages d'admission ramifiés (91"), de l'air d'admission étant prélevé desdits passages d'admission ramifiés (91") et introduit dans les cylindres (1 à 4) respectifs, ledit clapet d'étranglement (92") est prévu dans ledit passage d'admission (90") avant la ramification, et une quantité d'air d'admission, fournie audit passage d'admission (90"), est commandée avec ledit dispositif de commande de vitesse de ralenti (60").
